# EUROPEAN PATENT SPECIFICATION

(11) **EP 4 152 882 B1**
(45) Date of publication and mention of the grant of the patent: **02.12.2026**
(21) Application number: 21825539.6
(22) Date of filing: 29.04.2021
(51) Int. Cl.: H04W 76/12, H04L 41/0895, H04L 41/40, H04L 41/5051, H04W 88/14, H04W 92/24

(54) **SESSION ESTABLISHMENT METHOD, APPARATUS AND SYSTEM AND COMPUTER STORAGE MEDIUM**
SITZUNGSHERSTELLUNGSVERFAHREN, -VORRICHTUNG UND -SYSTEM SOWIE COMPUTERSPEICHERMEDIUM
PROCÉDÉ, APPAREIL ET SYSTÈME D'ÉTABLISSEMENT DE SESSION, ET SUPPORT DE STOCKAGE INFORMATIQUE

(30) Priority: 18.06.2020 CN 202010578163
(43) Date of publication of application: 22.03.2023
(73) Proprietor: HUAWEI TECHNOLOGIES CO., LTD., Shenzhen, Guangdong 518129 (CN)
(72) Inventor: HU, Xiang, Shenzhen, Guangdong 518129 (CN)
(74) Representative: Epping - Hermann - Fischer
(86) International application number: PCT/CN2021/090946
(87) International publication number: WO 2021/254001

(56) References cited:
- EP-A1- 3 742 799
- WO-A1-2019/184651
- CN-A- 110 392 448
- CN-A- 110 830 991
- US-A1- 2019 182 875
- US-A1- 2020 053 828
- HUAWEI; HISILICON: "KI#5, New Solution: Slice data rate enforcement and dynamic adjustment", SA WG2 MEETING #139E S2-2004133, vol. SA WG2, 22 May 2020 (2020-05-22), Elbonia, pages 1 - 4, XP051890140

## Description

### TECHNICAL FIELD

The present invention relates to the field of wireless communication technologies, and in particular, to a session establishment method and apparatus, a system, and a computer storage medium.

### BACKGROUND

In a 5th-generation mobile communication technology (5th Generation mobile communication technology, 5G), a network architecture of a next-generation core network device is readjusted. A CP (Control Plane, control plane) provides a related function externally by using a service-based interface. The CP and a UP (User Plane, user plane) exchange messages through an N4/Sx interface, to implement user policy delivery from the CP to the UP and event reporting processing from the UP to the CP. Based on a current 5G network architecture, a session management function (Session Management Function, SMF) network element and a user plane function (User Plane Function, UPF) complete session establishment through an N4 interface.

In a 5G non-roaming scenario, a session establishment process is considered from a perspective of an N4 interface. A slice type and a slice identifier are unperceived in a session establishment request received by a UPF network element and a processing procedure. Each slice instance is an independent UPF network element. Therefore, in a scenario in which a large quantity of slice instances are deployed, an N4 interface address of a UPF network element that needs to be managed and configured by an SMF network element greatly increases. Consequently, networking and maintenance become more difficult.

Document WO 2019/184651 A1 describes a communication method comprising: a central unit-control plane receiving a second message from a core network element, the second message carrying auxiliary information, the auxiliary information comprising the identifier of a first data network corresponding to a protocol data unit (PDU) session; the central unit-control plane determining a first central unit-user plane corresponding to the PDU session according to the auxiliary information. The method and device of the present application can select an appropriate central unit-user plane for a PDU session.

Document US 2020/053828 A1 describes that a SMF receives from a first UPF, first message(s) indicating a status of the first UPF. The SMF determines, based on the status, to transfer sessions for a group of wireless devices from the first UPF to a second UPF. The SMF sends to the second UPF, a second message indicating an establishment request of sessions for the group of wireless devices. The second message comprises session identifiers of the sessions. The SMF receives from the second UPF, a third message indicating a result of the establishment request. The SMF sends to the first UPF, based on the result, a fourth message indicating release of session(s) of the sessions. The fourth message comprises session identifier(s) of the session(s).

Document CN 110 830 991 describes a method comprising the following steps: a user plane gateway receives a service request message from User Equipment (UE), wherein the service request message is used for requesting to establish the connection between the UE and a service server of a data network; the user plane gateway and the UE respectively generate an encryption key and an integrity protection key based on the service request message, and activate encryption protection and/or integrity protection based on the generated encryption key and integrity protection key. Document Huawei; HiSilicon: "Kl#5, New Solution: Slice data rate enforcement and dynamic adjustment", XP051890140, describes a slice data rate enforcement.

### SUMMARY

This application provides a session establishment method and apparatus, a system, and a computer storage medium, so that an SMF network element can select and manage a plurality of slice instances deployed in a single UPF network element in a centralized manner. The present invention is defined by the attached set of claims.

### BRIEF DESCRIPTION OF DRAWINGS

FIG. 1 is a diagram of a network architecture of a communication system according to an embodiment of this application;
FIG. 2 is a schematic diagram of a multi-slice instance implementation;
FIG. 3 is a schematic diagram of an N4 interface configuration according to an embodiment of this application;
FIG. 4 is a schematic diagram of another N4 interface configuration according to an embodiment of this application;
FIG. 5 is a schematic diagram of another multi-slice instance implementation;
FIG. 6 is a schematic flowchart of a session establishment method according to an embodiment of this application;
FIG. 7 is a schematic diagram of a framework of a session establishment apparatus according to an embodiment of this application;
FIG. 8 is a schematic diagram of a framework of another session establishment apparatus according to an embodiment of this application;
FIG. 9 is a schematic diagram of a framework of a network device according to an embodiment of this application; and
FIG. 10 is a schematic diagram of a framework of another network device according to an embodiment of this application.

### DESCRIPTION OF EMBODIMENTS

Embodiments of this application are described below in detail with reference to the accompanying drawings in embodiments of this application.

Network elements in this application are described below.

A terminal device may include a handheld device, a vehicle-mounted device, a wearable device, or a computing device that have a wireless communication function or another processing device connected to a wireless modem, and user equipment (User Equipment, UE), a mobile station (Mobile Station, MS), terminal equipment (Terminal Equipment, TE), and the like that are in various forms.

Main functions of an SMF network element include session related functions, for example, session management (for example, session establishment, modification, and release, including tunnel maintenance between a UPF and a RAN), selection and control of the UPF, service and session continuity (Service and Session Continuity, SSC) mode selection, and roaming.

A UPF network element is a user plane function network element, and may be connected to an external data network. Main functions include user plane related functions, for example, data packet routing and transmission, packet detection, service usage reporting, QoS processing, lawful interception, uplink packet detection, and downlink data packet storage.

Main functions of a mobility management function (Access and Mobility Management Function, AMF) network element include access and mobility related functions, for example, connection management, mobility management, registration management, access authentication and authorization, reachability management, and security context management.

Main functions of a network repository function (Network Repository Function, NRF) network element include: service discovery (to be specific, receiving a network element discovery request from a network element function entity, and feeding back information about a network element entity that needs to be "discovered"), and maintaining information about an available network function entity and a service supported by the available network function entity.

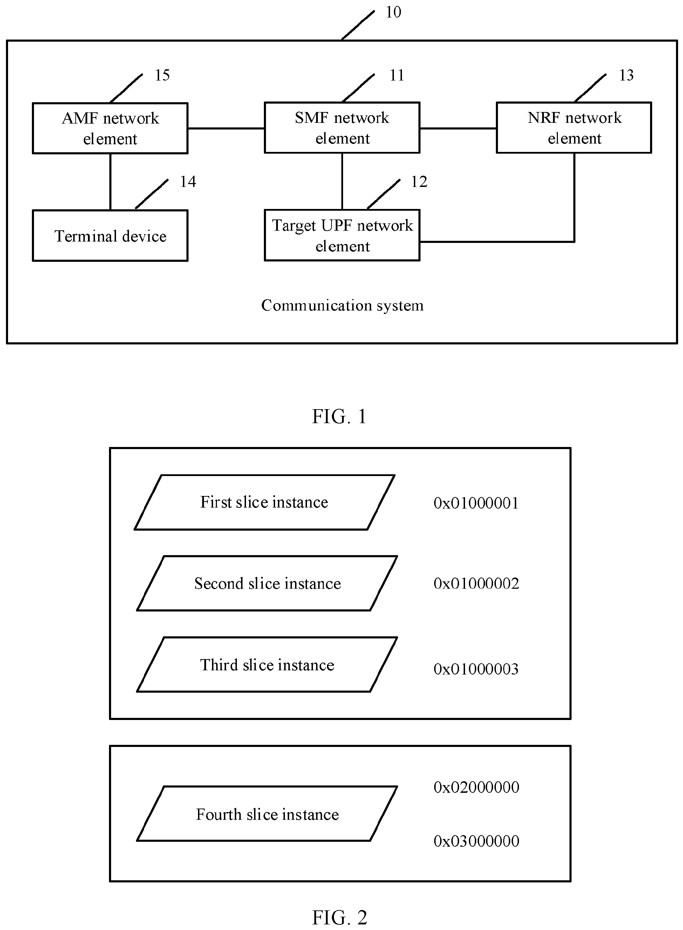

FIG. 1 is a diagram of a network architecture of a communication system according to an embodiment of this application. As shown in FIG. 1, the communication system 10 includes an SMF network element 11, a target UPF network element 12, an NRF network element 13, a terminal device 14, and an AMF network element 15. The SMF network element 11, the target UPF network element 12, the NRF network element 13, and the AMF network element 15 are all core network elements.

A single SMF network element 11 may manage one or more first UPF network elements. Each first UPF network element may deploy a plurality of slice instances in one virtual network function (Virtual Network Function, VNF) entity by using a network slice. The plurality of slice instances may have different slice types, to meet different service level agreement (Service Level Agreement, SLA) specification requirements.

In an optional implementation, a manner in which the first UPF network element performs network slicing may specifically include: A communication service management function (Communication Service Management Function, CSMF) network element receives a service requirement of a customer, converts the service requirement into a network slice requirement, and sends the network slice requirement to a network slice management function (Network Slice Management Function, NSMF) network element. The NSMF network element converts the received network slice requirement into a network slice subnet requirement, and sends the network slice subnet requirement to a network slice subnet management function (Network Slice Subnet Management Function, NSSMF) network element. The NSSMF network element converts the received network slice subnet requirement into a network function requirement, and sends the network function requirement to a management and orchestration (Management and Orchestration, MANO) network element. The MANO network element performs network service instantiation based on the received network function requirement.

A slice instance may be identified by using a network slice instance identifier (Network Slice Instance Identifier, NSI ID) or single network slice selection assistance information (Single Network Slice Selection Assistance Information, S-NSSAI). The S-NSSAI includes a 1-byte slice/service type (Slice/Service type, SST) and/or a 3-byte slice differentiator (Slice Differentiator, SD). Values of the SST may be 1, 2, or 3, and respectively indicate that slice types are enhanced mobile broadband (Enhanced Mobile Broadband, eMBB), ultra-reliable and low latency communication (Ultra-reliable and Low Latency Communication, URLLC), and massive Internet of Things (Massive Internet of Things, MIoT). The SD is used to distinguish between different slice instances of a same slice type.

One slice instance may have one or more slice types. For example, as shown in FIG. 2, a first slice instance, a second slice instance, and a third slice instance are all eMBB-type slices, and S-NSSAI values of the first slice instance, the second slice instance, and the third slice instance are respectively 0x01000001, 0x01000002, and 0x01000003. A fourth slice instance is both a URLLC-type slice and an MIoT-type slice, and may provide services for both URLLC-type and MIoT-type services. When the fourth slice instance is the URLLC-type slice, an S-NSSAI value of the fourth slice instance is 0x02000000. When the fourth slice instance is the MIoT-type slice, an S-NSSAI value of the fourth slice instance is 0x03000000.

In an optional implementation, the first UPF network element (or a VNF corresponding to the first UPF network element) provides a common N4 interface externally to implement node-level management and session message processing capabilities. To be specific, the VNF plans a shared N4 interface address for the plurality of slice instances deployed in the first UPF network element to provide a signaling service. Therefore, the first UPF network element does not need to modify an N4 interface configuration when adding or deleting a slice instance. In this implementation, the plurality of slice instances deployed in the first UPF network element are presented externally (to be specific, to the SMF network element 11) as a common second UPF network element. It may be understood that the second UPF network element and the first UPF network element are a same UPF network element.

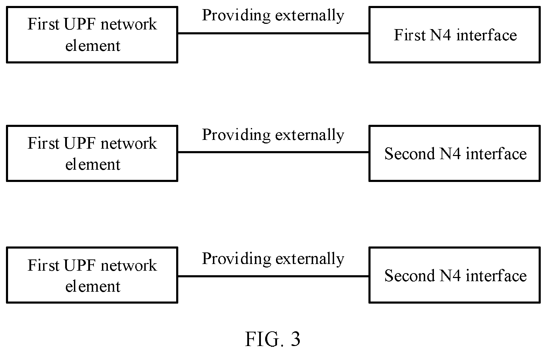

For example, as shown in FIG. 3, when the SMF network element 11 manages three first UPF network elements, the three first UPF network elements may respectively provide a common first N4 interface, a common second N4 interface, and a common third N4 interface externally.

In another optional implementation, the first UPF network element (or a VNF corresponding to the first UPF network element) provides a plurality of N4 interfaces externally to implement node-level management and session message processing capabilities. To be specific, the VNF plans a plurality of N4 interfaces for the plurality of slice instances deployed in the first UPF network element to provide a signaling service. In this implementation, the plurality of slice instances deployed in the first UPF network element are presented externally (to be specific, to the SMF network element 11) as a plurality of second UPF network elements. A quantity of second UPF network elements is the same as a quantity of N4 interfaces provided externally by the VNF, and is less than a quantity of slice instances. In other words, one or more slice instances are deployed in each second UPF network element, and a plurality of slice instances are deployed in at least one second UPF network element.

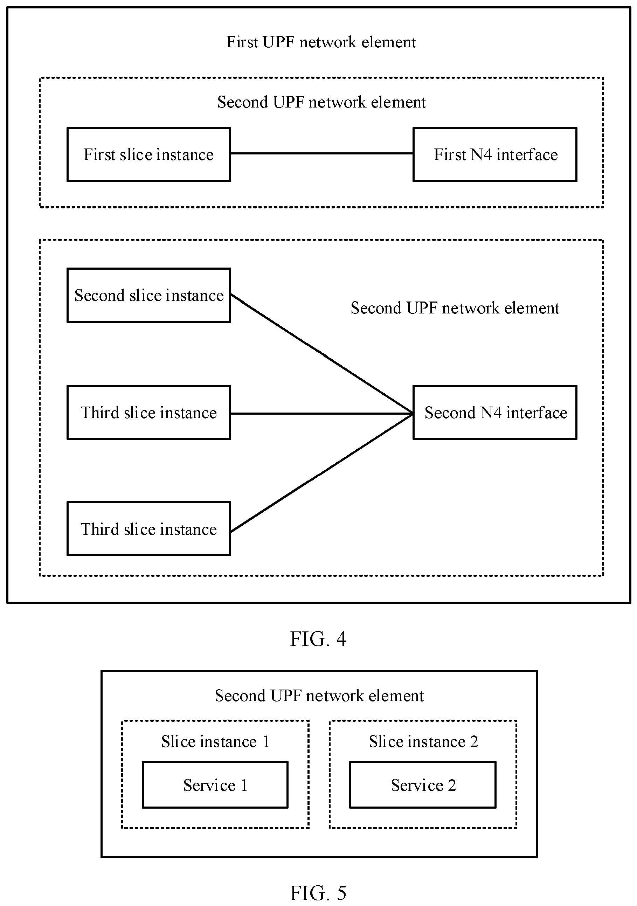

For example, as shown in FIG. 4, when a first slice instance, a second slice instance, a third slice instance, and a fourth slice instance are deployed in the first UPF network element, if the VNF plans a first N4 interface for the first slice instance to provide a signaling service, and plans a second N4 interface for the second slice instance, the third slice instance, and the fourth slice instance to provide a signaling service, the first slice instance, the second slice instance, the third slice instance, and the fourth slice instance are presented as two second UPF network elements to the SMF network element 11. The two second UPF network elements respectively correspond to the first N4 interface and the second N4 interface, the first slice instance is deployed in one of the two second UPF network elements, and the second slice instance, the third slice instance, and the fourth slice instance are deployed in the other second UPF network element.

It should be noted that the target UPF network element 12 described below in this application is presented as a second UPF network element to the SMF network element 11.

In this embodiment of this application, services of a plurality of slice instances deployed in the second UPF network element are independent of each other. Therefore, the plurality of slice instances may relatively independently provide a session management capability and a data forwarding capability. For example, as shown in FIG. 5, when a slice instance 1 and a slice instance 2 are deployed in the second UPF network element, the slice instance 1 and the slice instance 2 independently provide services.

In an optional implementation, the plurality of slice instances deployed in the second UPF network element may share a network element support service (including sharing an enterprise general framework (Senparc Core Framework, SCF), a database (Database, DB), a cloud service engine (Cloud Service Engine, CSE), an unacknowledged mode (Unacknowledged Mode, UM) service, a load balance/internet protocol (Load Balance/Internet Protocol, LB/IP) interface, and the like), and independently provide a service support service.

In another optional implementation, the plurality of slice instances deployed in the second UPF network element may share a network element support service and a service support service.

Further, the second UPF network element may avoid mutual impact between the plurality of slice instances based on session processing and isolation of data forwarding paths in the following different dimensions:
(a) Differentiated deployment modes and performance specifications are planned for service processing units of different slice instances through configuring. For example, independent host (Host) deployment, virtual machine (Virtual Machine, VM) deployment, and container deployment may be supported physical deployment.
(b) Different virtual private networks (Virtual Private Networks, VPNs) and independent N3 addresses and independent N9 addresses are configured and planned for different slice instances, where IP address pools of UE are isolated from each other.

(3) When different slice instances have a same N3 address and a same N9 address, because data plane packets encapsulated by N3 and N9 each are identified by using a fully qualified tunnel endpoint identifier (Fully Tunnel Endpoint Identifier, F-TEID) range, and the F-TEID includes an N3 address, an N9 address, and a TEID, the second UPF network element configures and plans different TEID segments for different slice instances.

In other words, the second UPF network element may allocate independent F-TEID ranges for the plurality of slice instances by configuring and planning independent N3 addresses and independent N9 addresses for different slice instances or configuring and planning different TEID segments for different slice instances.

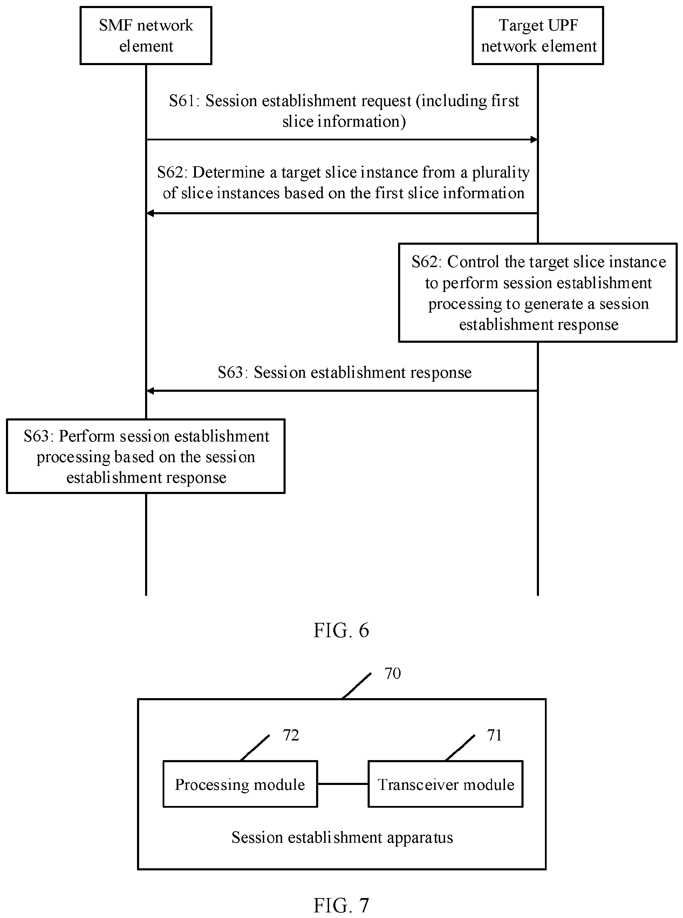

Refer to FIG. 1 and FIG. 6. FIG. 6 is a schematic flowchart of a session establishment method according to an embodiment of this application. The session establishment method is applied to the communication system 10 shown in FIG. 1. The session establishment method shown in FIG. 6 may include steps S61 to S63. The steps are described in detail below.

S61: An SMF network element sends a session establishment request to a target UPF network element.

When a session needs to be established, a terminal device 14 sends a first protocol data unit (Protocol Data Unit, PDU) session establishment request (PDU Session Establishment Request) to an AMF network element 15 through an N1 interface (in other words, over an access network).

When receiving the first PDU session establishment request, the AMF network element 15 sends a second PDU session establishment request Nsmf_PDUSession_CreateSMContext Request to the SMF network element 11.

When receiving the second PDU session establishment request, the SMF network element 11 determines the target UPF network element 12 from a plurality of second UPF network elements managed by the SMF network element 11. In an optional implementation, that the SMF network element 11 determines the target UPF network element 12 from a plurality of second UPF network elements managed by the SMF network element 11 may specifically include: obtaining slice instance attributes of the plurality of second UPF network elements; and determining the target UPF network element 12 from the plurality of second UPF network elements based on the slice instance attributes of the plurality of second UPF network elements.

The slice instance attribute of each of the plurality of second UPF network elements includes one or more running statuses or load information of one or more slice instances deployed in each of the plurality of second UPF network elements, and a slice instance attribute of at least one second UPF network element includes running statuses or load information of a plurality of slice instances deployed in the at least one second UPF network element (in other words, a plurality of slice instances are deployed in at least one of the plurality of second UPF network elements).

In this embodiment of this application, that the SMF network element 11 obtains slice instance attributes of the plurality of second UPF network elements may specifically include: receiving the slice instance attributes that are reported by the plurality of second UPF network elements through an N4 interface address corresponding to the plurality of second UPF network elements.

The plurality of second UPF network elements may periodically report the slice instance attributes of the plurality of second UPF network elements to the SMF network element 11 through the N4 interface address corresponding to the plurality of second UPF network elements.

Specifically, that the plurality of second UPF network elements periodically report the slice instance attributes of the plurality of second UPF network elements to the SMF network element 11 through the N4 interface address corresponding to the plurality of second UPF network elements may specifically include: The plurality of second UPF network elements periodically report the slice instance attributes of the plurality of second UPF network elements to the SMF network element 11 by using N4 interface session establishment request messages, N4 interface session modification request messages, N4 interface session establishment response messages, and N4 interface session modification response messages that correspond to the plurality of second UPF network elements. For example, the plurality of second UPF network elements may periodically report, to the SMF network element 11 by using a load control information (Load Control Information) element and an overload control information (Overload Control Information) element in the N4 interface session establishment request messages, the N4 interface session modification request messages, the N4 interface session establishment response messages, and the N4 interface session modification response messages that correspond to the plurality of second UPF network elements, one or more load control policies and one or more overload control policies of the one or more slice instances deployed in the plurality of second UPF network elements.

Alternatively, that the plurality of second UPF network elements periodically report the slice instance attributes of the plurality of second UPF network elements to the SMF network element 11 through the N4 interface address corresponding to the plurality of second UPF network elements may specifically include: The plurality of second UPF network elements extend an information element of a node-level heartbeat message, and periodically maintain NSI ID-based load control information and overload control information.

Therefore, the SMF network element 11 may perceive, by using the N4 interface session response message or the node-level heartbeat message, running statuses and/or load information of the slice instances deployed in the plurality of second UPF network elements. When a slice instance is overloaded, the SMF network element 11 no longer selects a second UPF network element corresponding to the overloaded slice instance to perform session establishment processing, but selects another second UPF network element with light load to perform session establishment processing.

In another optional implementation, that the SMF network element 11 determines the target UPF network element 12 from a plurality of second UPF network elements managed by the SMF network element 11 may specifically include: obtaining second slice information of the plurality of second UPF network elements; and determining the target UPF network element from the plurality of second UPF network elements based on the second slice information of the plurality of second UPF network elements.

The second slice information of each of the plurality of second UPF network elements includes S-NSSAI or one or more NSI IDs of one or more slice instances deployed in each of the plurality of second UPF network elements, and second slice information of at least one second UPF network element includes S-NSSAI or NSI IDs of a plurality of slice instances deployed in the at least one second UPF network element (in other words, a plurality of slice instances are deployed in at least one of the plurality of second UPF network elements).

In this embodiment of this application, that the SMF network element 11 obtains second slice information of the plurality of second UPF network elements may specifically include: obtaining the second slice information of the plurality of second UPF network elements from an NRF network element 13; or preconfiguring the second slice information of the plurality of second UPF network elements via an operations and maintenance (Operations and Maintenance, OM) platform.

In an optional implementation, when a VNF provides a common N4 interface externally, to be specific, the second UPF network element and the first UPF network element are a same UPF network element, before the SMF network element 11 obtains the second slice information of the plurality of second UPF network elements from the NRF network element 13, after completing slice instance deployment, the first UPF network element registers, with the NRF network element 13 based on a deployment status, different service level agreement (Service Level Agreement, SLA) slice identifiers that can be provided by the first UPF network element. Specifically, the first UPF network element may register, through an Nnrf_NFManagement _NFRegister interface, a slice identifier (for example, S-NSSAI) through which the first UPF network element can provide a service. Therefore, the SMF network element 11 may subscribe to statuses and selection policies of the plurality of second UPF network elements from the NRF network element 13 by using Nnrf_NFManagement_NFStatusSubscribe. Further, the NRF network element 13 may notify the SMF network element 11 of slice identifiers of the plurality of second UPF network elements by using Nnrf_NFManagement_NFStatusNotify.

In another optional implementation, when a VNF provides a plurality of N4 interfaces externally, before the SMF network element 11 obtains the second slice information of the plurality of second UPF network elements from the NRF network element 13, after completing slice instance deployment, the first UPF network element registers, with the NRF network element 13 based on a deployment status, different SLA slice identifiers that can be provided by the first UPF network element and N4 interface addresses corresponding to the different SLA slice identifiers. Specifically, the first UPF network element may register a slice identifier through which the first UPF network element can provide a service and an N4 interface address corresponding to each slice identifier through an Nnrf_NFManagement _NFRegister interface. Therefore, the SMF network element 11 may subscribe to statuses and selection policies of the plurality of second UPF network elements from the NRF network element 13 by using Nnrf_NFManagement_NFStatusSubscribe. Further, the NRF network element 13 may notify the SMF network element 11 of slice identifiers of the plurality of second UPF network elements and an N4 interface address of the plurality of second UPF network elements by using Nnrf_NFManagement_NFStatusNotify.

When the NRF network element 13 does not implement a service discovery and subscription mechanism of the plurality of UPF network elements, the SMF network element 11 may configure, via the OM platform, an N4 interface address and S-NSSAI ranges that correspond to the plurality of UPF network elements.

When a plurality of slice instances are deployed in the target UPF network element 12, the SMF network element 11 further determines a target slice instance from the plurality of slice instances deployed in the target UPF network element 12.

In an optional implementation, that the SMF network element 11 determines a target slice instance from the plurality of slice instances deployed in the target UPF network element 12 may specifically include: determining the target slice instance from the target UPF network element 12 based on running statuses or load information of the plurality of slice instances deployed in the target UPF network element 12.

In another optional implementation, that the SMF network element 11 determines a target slice instance from the plurality of slice instances deployed in the target UPF network element 12 may specifically include: determining the target slice instance from the target UPF network element 12 based on S-NSSAI or NSI IDs of the plurality of slice instances deployed in the target UPF network element 12.

Further, the SMF network element 11 may determine an N4 interface address corresponding to the target UPF network element 12, and send first slice information of the target slice instance to the target UPF network element 12 based on the N4 interface address. The first slice information may include S-NSSAI of the target slice instance or an NSI ID of the target slice instance.

That the SMF network element 11 sends first slice information of the target slice instance to the target UPF network element 12 may specifically include: sending a packet forwarding control protocol (Packet Forwarding Control Protocol, PFCP) session establishment request (PFCP Session Establishment Request) including the first slice information to the target UPF network element 12.

It may be understood that when only one slice instance is deployed in the target UPF network element 12, the SMF network element 11 may send, to the target UPF network element 12, a PFCP session establishment request that does not include slice information.

S62: The target UPF network element determines the target slice instance from the plurality of slice instances based on the first slice information, and controls the target slice instance to perform session establishment processing to generate a session establishment response.

In this embodiment of this application, the target UPF network element 12 can parse S-NSSAI or an NSI ID included in the PFCP session establishment request, and determine the target slice instance from the plurality of slice instances based on the S-NSSAI or the NSI ID.

That the target UPF network element 12 controls the target slice instance to perform session establishment processing to generate a session establishment response may specifically include: The target UPF network element 12 sends the PFCP session establishment request to the target slice instance. In response to the PFCP session establishment request, the target slice instance establishes a fully qualified session endpoint identifier (Fully Session Endpoint Identifier, F-SEID), an N3 tunnel, and an N9 tunnel that are dedicated to the slice instance, allocates an IP address of UE, and provides slice SLA requirements in forwarding, bandwidth, delay, and the like for subsequent data forwarding, and then returns a PFCP session establishment response (PFCP Session Establishment Response) to the SMF network element 11.

The F-SEID may be, for example, an F-TEID, and the PFCP session establishment response may include the N3 address, the N9 address, the F-TEID, the IP address of the UE, and the like that correspond to the target slice instance. It may be understood that when only one slice instance is deployed in the target UPF network element 12, the target UPF network element 12 may directly control the slice instance to perform session establishment processing to generate a session establishment response.

S63: The SMF network element receives the session establishment response from the target UPF network element, and performs session establishment processing based on the session establishment response.

That the SMF network element 11 performs session establishment processing based on the session establishment response may specifically include: routing a data plane packet of a user to the target slice instance by using an N3 F-TEID and an N9 F-TEID that correspond to the target slice instance, to perform data processing, and share a corresponding slice service capability.

In this embodiment of this application, a plurality of slice instances can be deployed in a single UPF network element. In addition, in this embodiment of this application, slice information is carried in the session establishment request, so that the SMF network element can select and manage the plurality of slice instances deployed in the single UPF network element in a centralized manner. Therefore, networking and maintenance are simplified. In addition, the SMF network element, can select and manage, through a unified N4 interface, the plurality of slice instances deployed in the single UPF network element. Therefore, in this embodiment of this application, when a new slice instance is deployed in the UPF network element, node-level management and session-level message processing on the newly added slice instance can be implemented without adding to the SMF network element a new N4 interface address for the UPF network element. In addition, an independent F-TEID range is allocated to each of the plurality of slice instances deployed in the single UPF network element, so that session processing and isolation of data forwarding paths between slice instances can be implemented in this embodiment of this application.

FIG. 7 is a schematic diagram of a framework of a session establishment apparatus according to an embodiment of this application. The session establishment apparatus 70 includes an SMF network element. The session establishment apparatus 70 may be a network device or a chip in a network device. As shown in FIG. 7, the session establishment apparatus 70 includes a transceiver module 71 and a processing module 72.

The transceiver module 71 is configured to send a session establishment request to a target UPF network element, where the session establishment request includes first slice information of a target slice instance, and the first slice information indicates the target UPF network element to select the target slice instance from a plurality of slice instances deployed in the target UPF network element, to perform session establishment processing.

The transceiver module 71 is further configured to: receive a session establishment response sent by the target UPF network element, and perform session establishment processing based on the session establishment response.

In an optional implementation, the first slice information includes S-NSSAI of the target slice instance or an NSI ID of the target slice instance.

In an optional implementation, the processing module 72 is configured to: determine the target UPF network element from a plurality of UPF network elements managed by the SMF network element; and determine the target slice instance from the plurality of slice instances deployed in the target UPF network element.

In an optional implementation, the transceiver module 71 is further configured to obtain slice instance attributes of the plurality of UPF network elements, where the slice instance attribute of each UPF network element includes one or more running statuses or load information of one or more slice instances deployed in each UPF network element, and a slice instance attribute of at least one UPF network element includes running statuses or load information of a plurality of slice instances deployed in the at least one UPF network element.

When determining the target UPF network element from the plurality of UPF network elements managed by the SMF network element, the processing module 72 is specifically configured to:
determine the target UPF network element from the plurality of UPF network elements based on the slice instance attributes of the plurality of UPF network elements.

In an optional implementation, when obtaining the slice instance attributes of the plurality of UPF network elements, the transceiver module 71 is specifically configured to:
receive the slice instance attributes reported by the plurality of UPF network elements through an N4 interface address corresponding to the plurality of UPF network elements.

In an optional implementation, the transceiver module 71 is further configured to obtain second slice information of the plurality of UPF network elements, where the second slice information of each UPF network element includes S-NSSAI or one or more NSI IDs of one or more slice instances deployed in each UPF network element, and second slice information of at least one UPF network element includes S-NSSAI or NSI IDs of a plurality of slice instances deployed in the at least one UPF network element.

When determining the target UPF network element from the plurality of UPF network elements managed by the SMF network element, the processing module 72 is specifically configured to:
determine the target UPF network element from the plurality of UPF network elements based on the second slice information of the plurality of UPF network elements.

In an optional implementation, when obtaining the second slice information of the plurality of UPF network elements, the transceiver module 71 is specifically configured to:
obtain the second slice information of the plurality of UPF network elements from a network repository function NRF network element; or
preconfigure the second slice information of the plurality of UPF network elements via an operations and maintenance OM platform.

In an optional implementation, when determining the target slice instance from the plurality of slice instances deployed in the target UPF network element, the processing module 72 is specifically configured to:
determine the target slice instance from the target UPF network element based on running statuses or load information of the plurality of slice instances deployed in the target UPF network element; and/or
determine the target slice instance from the target UPF network element based on S-NSSAI or NSI IDs of the plurality of slice instances deployed in the target UPF network element.

In an optional implementation, the processing module 72 is further configured to determine a target N4 interface address corresponding to the target UPF network element.

When sending the session establishment request to the target UPF network element, the transceiver module 71 is specifically configured to:
send the session establishment request to the target UPF network element based on the target N4 interface address.

It should be noted that when the session establishment apparatus 70 is a network device, the processing module 72 may be a processor, and the transceiver module 71 may be a transceiver. The network device may further include a storage module, and the storage module may be a memory. The storage module is configured to store instructions, and the processing module 72 executes the instructions stored in the storage module. When the session establishment apparatus 70 is a chip in a network device, the processing module 72 may be a processor, and the transceiver module 71 may be an input/output interface, a pin, a circuit, or the like. The processing module 72 executes instructions stored in a storage module. The storage module may be a storage module (for example, a register or a cache) in the chip, or may be a storage module (for example, a read-only memory (Read-Only Memory, ROM) or a random access memory (Random Access Memory, RAM)) that is in the network device and that is located outside the chip.

In this embodiment of this application, a plurality of slice instances can be deployed in a single UPF network element. In addition, in this embodiment of this application, slice information is carried in the session establishment request, so that the SMF network element can select and manage the plurality of slice instances deployed in the single UPF network element in a centralized manner. Therefore, networking and maintenance are simplified. In addition, the SMF network element, can select and manage, through a unified N4 interface, the plurality of slice instances deployed in the single UPF network element. Therefore, in this embodiment of this application, when a new slice instance is deployed in the UPF network element, node-level management and session-level message processing on the newly added slice instance can be implemented without adding to the SMF network element a new N4 interface address for the UPF network element.

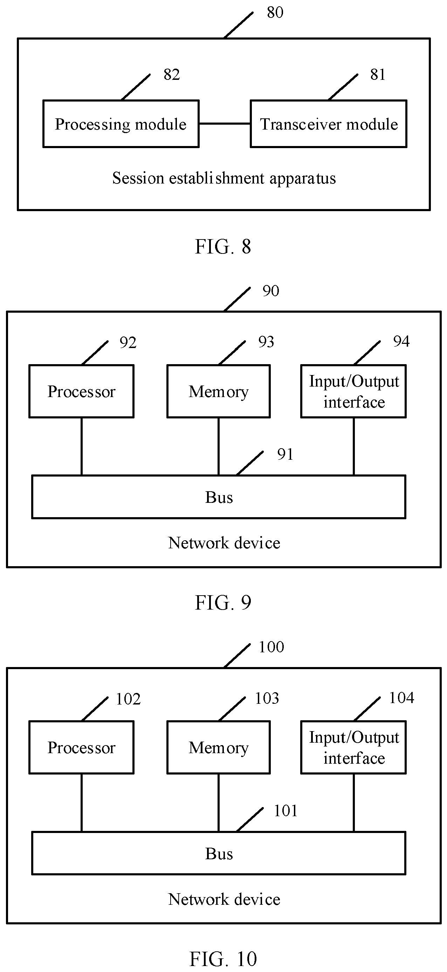

FIG. 8 is a schematic framework diagram of another session establishment apparatus according to an embodiment of this application. The session establishment apparatus 80 includes a UPF network element, and a plurality of slice instances are deployed in the UPF network element. The session establishment apparatus 80 may be a network device or a chip in a network device. As shown in FIG. 8, the session establishment apparatus 80 includes a transceiver module 81 and a processing module 82.

The transceiver module 81 is configured to receive a session establishment request from an SMF network element, where the session establishment request includes first slice information.

The processing module 82 is configured to: determine a target slice instance from a plurality of slice instances based on the first slice information, and control the target slice instance to perform session establishment processing to generate a session establishment response.

The transceiver module 81 is further configured to send the session establishment response to the SMF network element, where the session establishment response indicates the SMF network element to perform session establishment processing based on the session establishment response.

In an optional implementation, the first slice information includes S-NSSAI or an NSI ID.

In an optional implementation, the processing module 82 is further configured to allocate an independent fully qualified tunnel endpoint identifier F-TEID range for each of the plurality of slice instances.

When controlling the target slice instance to perform session establishment processing, the processing module 82 is specifically configured to:
control the target slice instance to perform session establishment processing based on an F-TEID range corresponding to the target slice instance.

It should be noted that when the session establishment apparatus 80 is a network device, the processing module 82 may be a processor, and the transceiver module 81 may be a transceiver. The network device may further include a storage module, and the storage module may be a memory. The storage module is configured to store instructions, and the processing module 82 executes the instructions stored in the storage module. When the session establishment apparatus 80 is a chip in a network device, the processing module 82 may be a processor, and the transceiver module 81 may be an input/output interface, a pin, a circuit, or the like. The processing module 82 executes instructions stored in a storage module. The storage module may be a storage module (for example, a register or a cache) in the chip, or may be a storage module (for example, a ROM or a RAM) that is in the network device and that is located outside the chip.

In this embodiment of this application, a plurality of slice instances can be deployed in a single UPF network element. In addition, in this embodiment of this application, slice information is carried in the session establishment request, so that the plurality of slice instances deployed in the single UPF network element can be selected and managed in a centralized manner. Therefore, networking and maintenance are simplified. In addition, an independent F-TEID range is allocated to each of the plurality of slice instances deployed in the single UPF network element, so that session processing and isolation of data forwarding paths between slice instances can be implemented in this embodiment of this application.

FIG. 9 is a schematic diagram of a framework of a network device 90 according to an embodiment of this application. As shown in FIG. 9, the network device 90 may include a bus 91, a processor 92, a memory 93, and an input/output interface 94. The bus 91 is configured to connect the processor 92, the memory 93, and the input/output interface 94 to each other, so that the foregoing elements can communicate with each other. The memory 93 is configured to store one or more computer programs, and the computer program includes computer instructions. The input/output interface 94 is configured to control a communication connection between the network device 90 and another device (for example, a terminal device).

Specifically, the processor 92 is configured to invoke the computer instructions to perform the following operations:
sending a session establishment request to a target UPF network element, where the session establishment request includes first slice information of a target slice instance, and the first slice information indicates the target UPF network element to select the target slice instance from a plurality of slice instances deployed in the target UPF network element, to perform session establishment processing; and
receiving a session establishment response sent by the target UPF network element, and performing session establishment processing based on the session establishment response.

In an optional implementation, the first slice information includes single network slice selection assistance information S-NSSAI of the target slice instance or a network slice instance identifier NSI ID of the target slice instance.

In an optional implementation, before being configured to invoke the computer instructions to perform the sending a session establishment request to a target UPF network element through a target N4 interface address, the processor 92 further performs the following operations:
determining the target UPF network element from a plurality of UPF network elements managed by the SMF network element; and
determining the target slice instance from the plurality of slice instances deployed in the target UPF network element.

In an optional implementation, when being configured to invoke the computer instructions to perform the determining the target UPF network element from a plurality of UPF network elements managed by the SMF network element, the processor 92 specifically performs the following operations:
obtaining slice instance attributes of the plurality of UPF network elements, where the slice instance attribute of each UPF network element includes one or more running statuses or load information of one or more slice instances deployed in each UPF network element, and a slice instance attribute of at least one UPF network element includes running statuses or load information of a plurality of slice instances deployed in the at least one UPF network element; and
determining the target UPF network element from the plurality of UPF network elements based on the slice instance attributes of the plurality of UPF network elements.

In an optional implementation, when being configured to invoke the computer instructions to perform the obtaining slice instance attributes of the plurality of UPF network elements, the processor 92 specifically performs the following operation:
receiving the slice instance attributes reported by the plurality of UPF network elements through an N4 interface address corresponding to the plurality of UPF network elements.

In an optional implementation, when being configured to invoke the computer instructions to perform the determining the target UPF network element from a plurality of UPF network elements managed by the SMF network element, the processor 92 specifically performs the following operations:
obtaining second slice information of the plurality of UPF network elements, where the second slice information of each UPF network element includes S-NSSAI or one or more NSI IDs of one or more slice instances deployed in each UPF network element, and second slice information of at least one UPF network element includes S-NSSAI or NSI IDs of a plurality of slice instances deployed in the at least one UPF network element; and
determining the target UPF network element from the plurality of UPF network elements based on the second slice information of the plurality of UPF network elements.

In an optional implementation, when being configured to invoke the computer instructions to perform the obtaining second slice information of the plurality of UPF network elements, the processor 92 specifically performs the following operation:
obtaining the second slice information of the plurality of UPF network elements from a network repository function NRF network element; or
preconfiguring the second slice information of the plurality of UPF network elements via an operations and maintenance OM platform.

In an optional implementation, when being configured to invoke the computer instructions to perform the determining the target slice instance from the plurality of slice instances deployed in the target UPF network element, the processor 92 specifically performs the following operations:
determining the target slice instance from the target UPF network element based on running statuses or load information of the plurality of slice instances deployed in the target UPF network element; and/or
determining the target slice instance from the target UPF network element based on S-NSSAI or NSI IDs of the plurality of slice instances deployed in the target UPF network element.

In an optional implementation, when being configured to invoke the computer instructions to perform the sending a session establishment request to a target UPF network element, the processor 92 specifically performs the following operations:
determining a target N4 interface address corresponding to the target UPF network element; and
sending the session establishment request to the target UPF network element based on the target N4 interface address.

The processor 92 may be a central processing unit (Central Processing Unit, CPU). The memory 93 may be any type of memory, for example, may be a ROM, a RAM, a nonvolatile random access memory, or the like.

Based on a same inventive concept, problem-resolving principles and beneficial effects of the network device 90 provided in this embodiment of this application are similar to those of the session establishment apparatus embodiment shown in FIG. 7 of this application. Therefore, for implementation of the network device 90, refer to implementation of the session establishment apparatus 70 shown in FIG. 7. Repeated parts are not described again.

FIG. 10 is a schematic diagram of a framework of another network device 100 according to an embodiment of this application. As shown in FIG. 10, the network device 100 may include a bus 101, a processor 102, a memory 103, and an input/output interface 104. The bus 101 is configured to connect the processor 102, the memory 103, and the input/output interface 104 to each other, so that the foregoing elements can communicate with each other. The memory 103 is configured to store one or more computer programs, and the computer program includes computer instructions. The input/output interface 104 is configured to control a communication connection between the network device 100 and another device (for example, a terminal device).

Specifically, the processor 102 is configured to invoke the computer instructions to perform the following operations:
receiving a session establishment request from an SMF network element, where the session establishment request includes first slice information;
determining a target slice instance from a plurality of slice instances based on the first slice information, and controlling the target slice instance to perform session establishment processing to generate a session establishment response; and
sending the session establishment response to the SMF network element, where the session establishment response indicates the SMF network element to perform session establishment processing based on the session establishment response.

In an optional implementation, the first slice information includes S-NSSAI or an NSI ID.

In an optional implementation, before being configured to invoke the computer instructions to perform the receiving a session establishment request from an SMF network element, the processor 102 further performs the following operation:
allocating an independent fully qualified tunnel endpoint identifier F-TEID range for each of the plurality of slice instances.

When being configured to invoke the computer instructions to perform the controlling the target slice instance to perform session establishment processing, the processor 102 specifically performs the following operation:
controlling the target slice instance to perform session establishment processing based on an F-TEID range corresponding to the target slice instance.

The processor 102 may be a CPU. The memory 103 may be any type of memory, for example, may be a ROM, a RAM, a nonvolatile random access memory, or the like.

Based on a same inventive concept, problem-resolving principles and beneficial effects of the network device 100 provided in this embodiment of this application are similar to those of the session establishment apparatus embodiment shown in FIG. 8 of this application. Therefore, for implementation of the network device 100, refer to implementation of the session establishment apparatus 80 shown in FIG. 8. Repeated parts are not described again.

It may be understood that the accompanying drawings in embodiments of this application show only simplified designs of the foregoing communication apparatuses. In actual application, the foregoing communication apparatuses are not limited to the foregoing structures.

It should be noted that the processor in embodiments of this application may be a CPU, a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The memory may be integrated into the processor, or may be disposed separately from the processor. An embodiment of this application further provides a chip. The chip is connected to a memory, and is configured to read and execute a software program stored in the memory, to implement any one of the methods in the foregoing method embodiments.

An embodiment of this application further provides a computer storage medium. The computer storage medium stores computer-readable instructions. When reading and executing the computer-readable instructions, a computer may complete any one of the methods in the foregoing method embodiments.

An embodiment of this application further provides a computer program product including a software program. When the computer program product is run on a computer, the computer is enabled to perform any one of the methods in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer instructions.

The objectives, technical methods, and beneficial effects of this application have been described in detail in the foregoing embodiments. It should be understood that the foregoing descriptions are only specific implementations of this application, but are not intended to limit the protection scope of this application.

## Claims

1. A session establishment method, applied to a session management function network element, wherein the method comprises:
sending a session establishment request to a target user plane function network element (S61), wherein the session establishment request comprises first slice information of a target slice instance, and the first slice information indicates the target user plane function network element to select the target slice instance from a plurality of slice instances deployed in the target user plane function network element, to perform session establishment processing; and
receiving a session establishment response sent by the target user plane function network element, and performing session establishment processing based on the session establishment response (S63).

2. The method according to claim 1, wherein the first slice information comprises single network slice selection assistance information of the target slice instance or a network slice instance identifier of the target slice instance.

3. The method according to claim 1 or 2, wherein before the sending a session establishment request to a target user plane function network element, the method further comprises:
determining the target user plane function network element from a plurality of user plane function network elements managed by the session management function network element; and
determining the target slice instance from the plurality of slice instances deployed in the target user plane function network element.

4. The method according to claim 3, wherein the determining the target user plane function network element from a plurality of user plane function network elements managed by the session management function network element comprises:
obtaining slice instance attributes of the plurality of user plane function network elements, wherein the slice instance attribute of each user plane function network element comprises one or more running statuses or load information of one or more slice instances deployed in each user plane function network element, and a slice instance attribute of at least one user plane function network element comprises running statuses or load information of a plurality of slice instances deployed in the at least one user plane function network element; and
determining the target user plane function network element from the plurality of user plane function network elements based on the slice instance attributes of the plurality of user plane function network elements

5. The method according to claim 4, wherein the obtaining slice instance attributes of the plurality of user plane function network elements comprises:
receiving the slice instance attributes reported by the plurality of user plane function network elements through an N4 interface address corresponding to the plurality of user plane function network elements.

6. The method according to claim 3, wherein the determining the target user plane function network element from a plurality of user plane function network elements managed by the session management function network element comprises:
obtaining second slice information of the plurality of user plane function network elements, wherein the second slice information of each user plane function network element comprises single network slice selection assistance information or one or more network slice instance identifiers of one or more slice instances deployed in each user plane function network element, and second slice information of at least one user plane function network element comprises single network slice selection assistance information or network slice instance identifiers of a plurality of slice instances deployed in the at least one user plane function network element; and
determining the target user plane function network element from the plurality of user plane function network elements based on the second slice information of the plurality of user plane function network elements.

7. The method according to claim 6, wherein the obtaining second slice information of the plurality of user plane function network elements comprises:
obtaining the second slice information of the plurality of user plane function network elements from a network repository function network element; or
preconfiguring the second slice information of the plurality of user plane function network elements via an operations and maintenance platform.

8. The method according to any one of claims 3 to 7, wherein the determining the target slice instance from the plurality of slice instances deployed in the target user plane function network element comprises:
determining the target slice instance from the target user plane function network element based on running statuses or load information of the plurality of slice instances deployed in the target user plane function network element; and/or
determining the target slice instance from the target user plane function network element based on single network slice selection assistance information or network slice instance identifiers of the plurality of slice instances deployed in the target user plane function network element.

9. The method according to any one of claims 3 to 7, wherein the sending a session establishment request to a target user plane function network element comprises:
determining a target N4 interface address corresponding to the target user plane function network element; and
sending the session establishment request to the target user plane function network element based on the target N4 interface address.

10. A session establishment apparatus, comprising a module configured to perform the session establishment method according to any one of claims 1 to 9.

11. A computer-readable storage medium, wherein the computer-readable storage medium stores instructions; and when the instructions are run, a network device is enabled to perform the session establishment method according to any one of claims 1 to 9.

12. A computer program product comprising instructions, wherein when the computer program product is run on a communication apparatus, the communication apparatus is enabled to perform the session establishment method according to any one of claims 1 to 9.

## Patentansprüche

1. Sitzungsaufbauverfahren, das auf ein Sitzungsverwaltungsfunktions-Netzwerkelement angewendet wird, wobei das Verfahren umfasst:
Senden einer Sitzungsaufbauanforderung an ein Zielbenutzerebenenfunktions-Netzwerkelement (S61), wobei die Sitzungsaufbauanforderung erste Slice-Informationen einer Ziel-Slice-Instanz umfasst, und die ersten Slice-Informationen das Zielbenutzerebenenfunktions-Netzwerkelement angeben, die Ziel-Slice-Instanz aus einer Vielzahl von Slice-Instanzen auszuwählen, die in dem Zielbenutzerebenenfunktions-Netzwerkelement angewendet werden, um eine Sitzungsaufbauverarbeitung durchzuführen; und
Empfangen einer Sitzungsaufbauantwort, die von dem Zielbenutzerebenenfunktions-Netzwerkelement gesendet wird, und Durchführen einer Sitzungsaufbauverarbeitung basierend auf der Sitzungsaufbauantwort (S63).

2. Verfahren nach Anspruch 1, wobei die ersten Slice-Informationen Hilfsinformationen für die Auswahl einzelner Netzwerk-Slices der Ziel-Slice-Instanz oder eine Netzwerk-Slice-Instanz-Kennung der Ziel-Slice-Instanz umfassen.

3. Verfahren nach Anspruch 1 oder 2, wobei das Verfahren vor dem Senden einer Sitzungsaufbauanforderung an ein Zielbenutzerebenenfunktions-Netzwerkelement ferner umfasst:
Bestimmen des Zielbenutzerebenenfunktions-Netzwerkelements aus einer Vielzahl von Benutzerebenenfunktions-Netzwerkelementen, die von dem Sitzungsverwaltungsfunktions-Netzwerkelement verwaltet werden; und
Bestimmen der Ziel-Slice-Instanz aus der Vielzahl von Slice-Instanzen, die in dem Zielbenutzerebenenfunktions-Netzwerkelement angewendet werden.

4. Verfahren nach Anspruch 3, wobei das Bestimmen des Zielbenutzerebenenfunktions-Netzwerkelements aus einer Vielzahl von Benutzerebenenfunktions-Netzwerkelementen, die von dem Sitzungsverwaltungsfunktions-Netzwerkelement verwaltet werden, umfasst:
Erhalten von Slice-Instanz-Attributen aus der Vielzahl von Benutzerebenenfunktions-Netzwerkelementen, wobei das Slice-Instanz-Attribut jedes Benutzerebenenfunktions-Netzwerkelements einen oder mehrere Betriebszustände oder Lastinformationen einer oder mehrerer Slice-Instanze, die in jedem Benutzerebenenfunktions-Netzwerkelement angewendet werden, umfasst, und ein Slice-Instanz-Attribut mindestens eines Benutzerebenenfunktions-Netzwerkelements Betriebszustände oder Lastinformationen einer Vielzahl von Slice-Instanzen, die in dem mindestens einen Benutzerebenenfunktions-Netzwerkelement angewendet werden, umfasst; und
Bestimmen des Zielbenutzerebenenfunktions-Netzwerkelements aus der Vielzahl von Benutzerebenenfunktions-Netzwerkelementen basierend auf den Slice-Instanz-Attributen aus der Vielzahl von Benutzerebenenfunktions-Netzwerkelementen.

5. Verfahren nach Anspruch 4, wobei das Erhalten von Slice-Instanz-Attributen aus der Vielzahl von Benutzerebenenfunktions-Netzwerkelementen umfasst:
Empfangen der Slice-Instanz-Attribute, die von der Vielzahl von Benutzerebenenfunktions-Netzwerkelementen über eine N4-Schnittstellenadresse, die der Vielzahl von Benutzerebenenfunktions-Netzwerkelementen entspricht, gemeldet werden.

6. Verfahren nach Anspruch 3, wobei das Bestimmen des Zielbenutzerebenenfunktions-Netzwerkelements aus einer Vielzahl von Benutzerebenenfunktions-Netzwerkelementen, die von dem Sitzungsverwaltungsfunktions-Netzwerkelement verwaltet werden, umfasst:
Erhalten von zweiten Slice-Informationen aus der Vielzahl von Benutzerebenenfunktions-Netzwerkelementen, wobei die zweiten Slice-Informationen jedes Benutzerebenenfunktions-Netzwerkelements Hilfsinformationen für die Auswahl einzelner Netzwerk-Slices oder eine oder mehrere Netzwerk-Slice-Instanz-Kennungen einer oder mehrerer Slice-Instanzen, die in jedem Benutzerebenenfunktions-Netzwerkelement angewendet werden, umfassen, und zweite Slice-Informationen mindestens eines Benutzerebenenfunktions-Netzwerkelements Hilfsinformationen für die Auswahl einzelner Netzwerk-Slices oder Netzwerk-Slice-Instanz-Kennungen aus einer Vielzahl von Slice-Instanzen, die in dem mindestens einen Benutzerebenenfunktions-Netzwerkelement angewendet werden, umfassen; und
Bestimmen des Zielbenutzerebenenfunktions-Netzwerkelement aus der Vielzahl von Zielbenutzerebenenfunktions-Netzwerkelementen basierend auf den zweiten Slice-Informationen aus der Vielzahl von Zielbenutzerebenenfunktions-Netzwerkelementen.

7. Verfahren nach Anspruch 6, wobei das Erhalten zweiter Slice-Informationen aus der Vielzahl von Benutzerebenenfunktions-Netzwerkelementen umfasst:
Erhalten der zweiten Slice-Informationen aus der Vielzahl von Benutzerebenenfunktions-Netzwerkelementen von einem Netzwerk-Repository-Funktions-Netzwerkelement; oder
Vorkonfigurieren der zweiten Slice-Informationen aus der Vielzahl von Benutzerebenenfunktions-Netzwerkelementen über eine Betriebs- und Wartungsplattform.

8. Verfahren nach einem der Ansprüche 3 bis 7, wobei das Bestimmen der Ziel-Slice-Instanz aus der Vielzahl von Slice-Instanzen, die in dem Zielbenutzerebenenfunktions-Netzwerkelement angewendet werden, umfasst:
Bestimmen der Ziel-Slice-Instanz aus dem Zielbenutzerebenenfunktions-Netzwerkelement basierend auf Betriebszuständen oder Lastinformationen aus der Vielzahl von Slice-Instanzen, die in dem Zielbenutzerebenenfunktions-Netzwerkelement angewendet werden; und/oder
Bestimmen der Ziel-Slice-Instanz aus dem Zielbenutzerebenenfunktions-Netzwerkelement basierend auf Hilfsinformationen für die Auswahl einzelner Netzwerk-Slices oder Netzwerk-Slice-Instanz-Kennungen aus der Vielzahl von Slice-Instanzen, die in dem Zielbenutzerebenenfunktions-Netzwerkelement angewendet werden.

9. Verfahren nach einem der Ansprüche 3 bis 7, wobei das Senden einer Sitzungsaufbauanforderung an ein Zielbenutzerebenenfunktions-Netzwerkelement umfasst:
Bestimmen einer Ziel-N4-Schnittstellenadresse, die dem Zielbenutzerebenenfunktions-Netzwerkelement entspricht; und Senden der Sitzungsaufbauanforderung an das Zielbenutzerebenenfunktions-Netzwerkelement basierend auf der Ziel-N4-Schnittstellenadresse.

10. Sitzungsaufbaueinrichtung, die ein Modul umfasst, das konfiguriert ist, um das Sitzungsaufbauverfahren nach einem der Ansprüche 1 bis 9 durchzuführen.

11. Computerlesbares Speichermedium, wobei das computerlesbare Speichermedium Anweisungen speichert; und, wenn die Anweisungen ausgeführt werden, eine Netzwerkvorrichtung aktiviert wird, um das Sitzungsaufbauverfahren nach einem der Ansprüche 1 bis 9 durchzuführen.

12. Computerprogrammprodukt, das Anweisungen umfasst, wobei, wenn das Computerprogrammprodukt auf einer Kommunikationseinrichtung abläuft, die Kommunikationseinrichtung aktiviert wird, um das Sitzungsaufbauverfahren nach einem der Ansprüche 1 bis 9 durchzuführen.

## Revendications

1. Procédé d'établissement de session, appliqué à un élément de réseau de fonction de gestion de session, dans lequel le procédé comprend :
l'envoi d'une demande d'établissement de session à un élément de réseau de fonction de plan utilisateur cible (S61), dans lequel la demande d'établissement de session comprend des premières informations de tranche d'une instance de tranche cible, et les premières informations de tranche indiquent à l'élément de réseau de fonction de plan utilisateur cible de sélectionner l'instance de tranche cible parmi une pluralité d'instances de tranches déployées dans l'élément de réseau de fonction de plan utilisateur cible, pour réaliser un traitement d'établissement de session ; et
la réception d'une réponse d'établissement de session envoyée par l'élément de réseau de fonction de plan utilisateur cible, et la réalisation d'un traitement d'établissement de session sur la base de la réponse d'établissement de session (S63).

2. Procédé selon la revendication 1, dans lequel les premières informations de tranche comprennent des informations d'aide à la sélection de tranche de réseau uniques de l'instance de tranche cible ou un identifiant d'instance de tranche de réseau de l'instance de tranche cible.

3. Procédé selon la revendication 1 ou 2, dans lequel, avant l'envoi d'une demande d'établissement de session à un élément de réseau de fonction de plan utilisateur cible, le procédé comprend en outre :
la détermination de l'élément de réseau de fonction de plan utilisateur cible parmi une pluralité d'éléments de réseau de fonction de plan utilisateur gérés par l'élément de réseau de fonction de gestion de session ; et
la détermination de l'instance de tranche cible à partir de la pluralité d'instances de tranches déployées dans l'élément de réseau de fonction de plan utilisateur cible.

4. Procédé selon la revendication 3, dans lequel la détermination de l'élément de réseau de fonction de plan utilisateur cible parmi une pluralité d'éléments de réseau de fonction de plan utilisateur gérés par l'élément de réseau de fonction de gestion de session comprend :
l'obtention d'attributs d'instances de tranches de la pluralité d'éléments de réseau de fonction de plan utilisateur, dans lequel l'attribut d'instance de tranche de chaque élément de réseau de fonction de plan utilisateur comprend un ou plusieurs états d'exécution ou informations de charge d'une ou de plusieurs instances de tranches déployées dans chaque élément de réseau de fonction de plan utilisateur, et un attribut d'instance de tranche d'au moins un élément de réseau de fonction de plan utilisateur comprend des états d'exécution ou informations de charge d'une pluralité d'instances de tranches déployées dans l'au moins un élément de réseau de fonction de plan utilisateur ; et
la détermination de l'élément de réseau de fonction de plan utilisateur cible parmi la pluralité d'éléments de réseau de fonction de plan utilisateur sur la base des attributs d'instances de tranches de la pluralité d'éléments de réseau de fonction de plan utilisateur.

5. Procédé selon la revendication 4, dans lequel l'obtention d'attributs d'instances de tranches de la pluralité d'éléments de réseau de fonction de plan utilisateur comprend :
la réception des attributs d'instances de tranches rapportés par la pluralité d'éléments de réseau de fonction de plan utilisateur par l'intermédiaire d'une adresse d'interface N4 correspondant à la pluralité d'éléments de réseau de fonction de plan utilisateur.

6. Procédé selon la revendication 3, dans lequel la détermination de l'élément de réseau de fonction de plan utilisateur cible parmi une pluralité d'éléments de réseau de fonction de plan utilisateur gérés par l'élément de réseau de fonction de gestion de session comprend :
l'obtention de secondes informations de tranches de la pluralité d'éléments de réseau de fonction de plan utilisateur, dans lequel les secondes informations de tranches de chaque élément de réseau de fonction de plan utilisateur comprennent des informations d'aide à la sélection de tranche de réseau uniques ou un ou plusieurs identifiants d'instances de tranches de réseau d'une ou de plusieurs instances de tranches déployées dans chaque élément de réseau de fonction de plan utilisateur, et des secondes informations de tranches d'au moins un élément de réseau de fonction de plan utilisateur comprennent des informations d'aide à la sélection de tranche de réseau uniques ou des identifiants d'instances de tranches de réseau d'une pluralité d'instances de tranches déployées dans l'au moins un élément de réseau de fonction de plan utilisateur ; et
la détermination de l'élément de réseau de fonction de plan utilisateur cible parmi la pluralité d'éléments de réseau de fonction de plan utilisateur sur la base des secondes informations de tranches de la pluralité d'éléments de réseau de fonction de plan utilisateur.

7. Procédé selon la revendication 6, dans lequel l'obtention de secondes informations de tranches de la pluralité d'éléments de réseau de fonction de plan utilisateur comprend :
l'obtention des secondes informations de tranches de la pluralité d'éléments de réseau de fonction de plan utilisateur à partir d'un élément de réseau de fonction de référentiel de réseau ; ou
la préconfiguration des secondes informations de tranches de la pluralité d'éléments de réseau de fonction de plan utilisateur par l'intermédiaire d'une plate-forme d'exploitation et de maintenance.

8. Procédé selon l'une quelconque des revendications 3 à 7, dans lequel la détermination de l'instance de tranche cible parmi la pluralité d'instances de tranches déployées dans l'élément de réseau de fonction de plan utilisateur cible comprend :
la détermination de l'instance de tranche cible à partir de l'élément de réseau de fonction de plan utilisateur cible sur la base d'états d'exécution ou d'informations de charge de la pluralité d'instances de tranches déployées dans l'élément de réseau de fonction de plan utilisateur cible ; et/ou
la détermination de l'instance de tranche cible à partir de l'élément de réseau de fonction de plan utilisateur cible sur la base d'informations d'aide à la sélection de tranche de réseau uniques ou d'identifiants d'instances de tranches de réseau de la pluralité d'instances de tranches déployées dans l'élément de réseau de fonction de plan utilisateur cible.

9. Procédé selon l'une quelconque des revendications 3 à 7, dans lequel l'envoi d'une demande d'établissement de session à un élément de réseau de fonction de plan utilisateur cible comprend :
la détermination d'une adresse d'interface N4 cible correspondant à l'élément de réseau de fonction de plan utilisateur cible ; et
l'envoi de la demande d'établissement de session à l'élément de réseau de fonction de plan utilisateur cible sur la base de l'adresse d'interface N4 cible.

10. Appareil d'établissement de session, comprenant un module configuré pour réaliser le procédé d'établissement de session selon l'une quelconque des revendications 1 à 9.

11. Support de stockage lisible par ordinateur, dans lequel le support de stockage lisible par ordinateur stocke des instructions ; et lorsque les instructions sont exécutées, un dispositif de réseau est activé pour réaliser le procédé d'établissement de session selon l'une quelconque des revendications 1 à 9.

12. Produit-programme d'ordinateur comprenant des instructions, dans lequel, lorsque le produit-programme d'ordinateur est exécuté sur un appareil de communication, l'appareil de communication est activé pour réaliser le procédé d'établissement de session selon l'une quelconque des revendications 1 à 9.
